# EUROPÄISCHE PATENTSCHRIFT

(11) **EP 1 637 750 B1**
(45) Veröffentlichungstag und Bekanntmachung des Hinweises auf die Patenterteilung: **02.05.2007**
(21) Anmeldenummer: 05017888.8
(22) Anmeldetag: 17.08.2005
(51) Int. Cl.: F16B 41/00, F16B 5/02

(54) **Rückhaltesystem für ein Befestigungsmittel**
Retention system for a fastening means
Système de retenue pour un élément de fixation

(30) Priorität: 15.09.2004 DE 102004044684
(43) Veröffentlichungstag der Anmeldung: 22.03.2006
(73) Patentinhaber: Patent-Treuhand-Gesellschaft für elektrische Glühlampen mbH, 81543 München (DE)
(72) Erfinder: Franck, Felix Dr., 80333 München (DE)

(56) Entgegenhaltungen:
- EP-A- 0 751 305
- US-A- 5 489 177

## Beschreibung

### Technisches Gebiet

Die Erfindung betrifft ein Rückhaltesystem für mit einem Gewinde versehene Befestigungsmittel gemäß dem Oberbegriff des Patentanspruchs 1. Ein solches Rückhaltesystem ist aus der US-A-5 489 177 bekannt.

### Stand der Technik

Zur Steigerung der Wirtschaftlichkeit moderner Fertigungsabläufe werden Einzelbauteile häufig vom Hersteller vormontiert an den Montageort geliefert. Dabei sind die Bauelemente bereits mit den zur weiteren Montage erforderlichen Befestigungsmitteln wie beispielsweise Schrauben oder Bolzen ausgestattet, d.h. die Befestigungsmittel sind montagebereit, jedoch lose in einem der Bauelemente eingesetzt. Insbesondere in der Gehäusetechnik, beispielsweise bei elektronischen Transformatoren der Niedervolt-Halogenlichttechnik, werden bereits anschlussfertig vormontierte Einheiten verwendet, bei denen die zum Anschluss der Leitungen vorbereiteten Klemmleisten von einem mit einer Befestigungsschraube versehenen Gehäusedeckel verschließbar sind. Dadurch wird ein kompaktes und zugleich montagefreundliches Design erreicht und der Installationsaufwand auf ein Minimum reduziert.

Während dem Transport und vor der Montage bzw. nach der Demontage der Bauelemente besteht jedoch die Gefahr, dass sich Befestigungsmittel aus den Durchgangslöchern lösen und verloren gehen. Um dies zu verhindern, wurden Rückhaltesysteme entwickelt, die durch Formschluss zwischen dem Gewinde des Befestigungsmittels und dem Bauelement einen sicheren Verlierschutz bieten.

Zur Verliersicherung von Befestigungsmitteln in einem Durchgangsloch ist es aus dem allgemeinen Stand der Technik bekannt, einen ringförmigen Vorsprung innerhalb des Durchgangslochs vorzusehen, dessen Innendurchmesser etwas kleiner gewählt ist als der Gewindeaußendurchmesser des Befestigungsmittels. Bei einem derartigen Rückhaltesystem wird das Befestigungsmittel axial in das Durchgangsloch eingedrückt, wobei sich der ringförmige Vorsprung elastisch verformt, in das Gewindeprofil eindringt und dadurch die Befestigungsschraube in dem Durchgangsloch sichert. Nachteilig bei derartigen Rückhaltesystemen ist, dass aufgrund der Gewindesteigung die Längsachse des Befestigungselements nicht mit der Längsachse des Durchgangslochs übereinstimmt - mit anderen Worten - das Befestigungsmittel nimmt in der vormontierten Position eine "schiefe" Lage im Durchgangsloch ein und kann bei der weiteren Montage nicht ordnungsgemäß in ein zweites Bauelement eingeschraubt werden.

Auch durch eine unterbrochene Ausgestaltung des ringförmigen Vorsprungs konnte die genannte Problematik der "schiefen Schraube" aufgrund des Gewindeeingriffs in die nunmehr vorhandenen Unterbrechungen nicht verbessert werden.

Weiterhin ist aus dem allgemeinen Stand der Technik ein Rückhaltesystem bekannt, bei dem in einem Durchgangsloch ein einzelner Gewindegang ausgebildet ist, um eine Befestigungsschraube senkrecht zur Längsachse des Durchgangslochs zu halten. Es zeigte sich, dass aufgrund der Gewindeausbildung in dem Durchgangsloch zwar die Längsachse des Befestigungselements mit der Längsachse des Durchgangslochs übereinstimmt, dass aber die eigentlich lose Verbindung zu einer festen Verbindung werden kann, wenn die Schraube sich im Gewindegang des Durchgangslochs selbst festschraubt, anstatt die beiden Bauelemente miteinander zu verbinden.

### Darstellung der Erfindung

Der Erfindung liegt die Aufgabe zugrunde, ein Rückhaltesystem für Befestigungsmittel, insbesondere für Befestigungsschrauben zu schaffen, das gegenüber herkömmlichen Lösungen eine verbesserte Halterung des Befestigungsmittels in einem Durchgangsloch ermöglicht.

Diese Aufgabe wird erfindungsgemäß durch die Merkmale des Patentanspruchs 1 gelöst. Besonders vorteilhafte Ausführungen der Erfindung sind in den abhängigen Ansprüchen beschrieben.

Das erfindungsgemäße Rückhaltesystem hat zumindest zwei im Wesentlichen diametral in einem Durchgangsloch eines Bauelements angeordnete Vorsprünge, die in Axialrichtung gesehen in Abhängigkeit von der Gewindesteigung eines Befestigungsmittels zueinander versetzt sind. Als Befestigungsmittel können alle mit einem Gewinde versehenen Befestigungsmittel, insbesondere Schrauben oder Bolzen Verwendung finden. Die Seitenflächen der Vorsprünge sind mit Gewindeflanken des Befestigungsmittels zumindest abschnittsweise in Anlage bringbar. Das Rückhaltesystem ist dadurch in der Lage, das Befestigungsmittel am Herausfallen zu hindern und die Längsachse des Befestigungsmittels in einer Position zu halten, die in etwa der Längsachse des Durchgangslochs entspricht. Dadurch wird ein Verkanten des Befestigungsmittels im Durchgangsloch wirkungsvoll verhindert und die weitere Montage wesentlich erleichtert.

Gemäß einem besonders bevorzugten Ausführungsbeispiel sind zwei Vorsprünge in Axialrichtung gesehen um einen Betrag, der in etwa dem halben Abstand der Gewindesteigung eines Befestigungsmittels oder einem ungeradzahligen Vielfachen davon entspricht, versetzt in dem Durchgangsloch angeordnet.

Vorzugsweise sind die Vorsprünge quer zur Axialrichtung gesehen in einem Abstand zueinander angeordnet, der etwas größer als der Kerndurchmesser, aber kleiner als der Gewindeaußendurchmesser des Befestigungsmittels ist. Hierdurch wird erreicht, dass das Befestigungsmittel innerhalb des Durchgangslochs beweglich angeordnet bleibt, jedoch aufgrund des kleineren Abstands zwischen den Vorsprüngen gegenüber dem größeren Gewindeaußendurchmesser des Befestigungsmittels unverlierbar in dem Durchgangsloch gehalten ist.

Als besonders vorteilhaft hat es sich erwiesen, die Vorsprünge einstückig mit der Durchgangsbohrung bspw. in Kunststoff-Spritzgusstechnik als Kreissegmente mit einem etwa keilförmigen Querschnitt auszubilden.

Die Vorsprünge können elastisch verformbar ausgebildet werden, so dass ein Einführen des Befestigungsmittels in das Durchgangsloch in axialer Richtung ermöglicht ist - mit anderen Worten - bei dem erfindungsgemäßen Rückhaltesystem kann das Befestigungsmittel axial in das Durchgangsloch eingedrückt werden, wobei sich die Vorsprünge elastisch verformen, in das Gewindeprofil eindringen und dadurch das Befestigungsmittel in der Durchgangsbohrung halten. Bei dieser Variante wird zum Einen aufgrund der elastisch ausgebildeten Vorsprünge ein Hindurchdrücken des Befestigungsmittels durch das in einem ersten Bauelement ausgebildete Durchgangsloch und zum Anderen das Ein- und Festschrauben des Befestigungsmittels direkt in dem zweiten Bauelement - bei weichen Werkstoffen, insbesondere bei Kunststoffen werden häufig Schrauben verwendet, die ihr Muttergewinde beim Einschrauben selbsttätig in das zweite Bauelement schneiden - oder einer Schraubenmutter, ohne ein ungewolltes Festgehen im Durchgangsloch ermöglicht. Dadurch ist ein Verbinden der beiden Bauelemente spaltfrei möglich und das Befestigungsmittel vor der Montage bzw. nach der Demontage gegen Verlieren gesichert.

Bei einer bevorzugten Ausbildung der Erfindung sind Kanten der Vorsprünge parallel zueinander und tangential zum Durchgangsloch angeordnet. Die Kanten ermöglichen eine symmetrische Aufnahme des Befestigungsmittels in dem Durchgangsloch.

Handelt es sich bei dem Durchgangsloch um ein Langloch, so sind die Vorsprünge vorzugsweise an den beiden längeren Seiten des Langlochs angeordnet. Diese Ausführung des Rückhaltesystems ermöglicht einen Toleranzausgleich der zwangsläufig vorhandenen Fertigungstoleranzen der zu verbindenden Bauelemente bei der Montage, da das Befestigungsmittel entlang einer Längsachse des Langlochs verschiebbar aufgenommen ist.

Das Bauelement ist vorzugsweise eine Kabelabdeckung für einen Transformator zum Betrieb einer Lampe.

### Kurze Beschreibung der Zeichnungen

Nachstehend wird die Erfindung anhand bevorzugter Ausführungsbeispiele näher erläutert. Es zeigen:
- Figur 1: eine Schnittdarstellung durch ein Bauelement mit einem erfindungsgemäßen Rückhaltesystem;
- Figur 2: eine Draufsicht auf das Rückhaltesystem aus Figur 1 und
- Figur 3: eine Draufsicht auf ein in einem Langloch ausgebildetes Rückhaltesystem.

### Bevorzugte Ausführungen der Erfindung

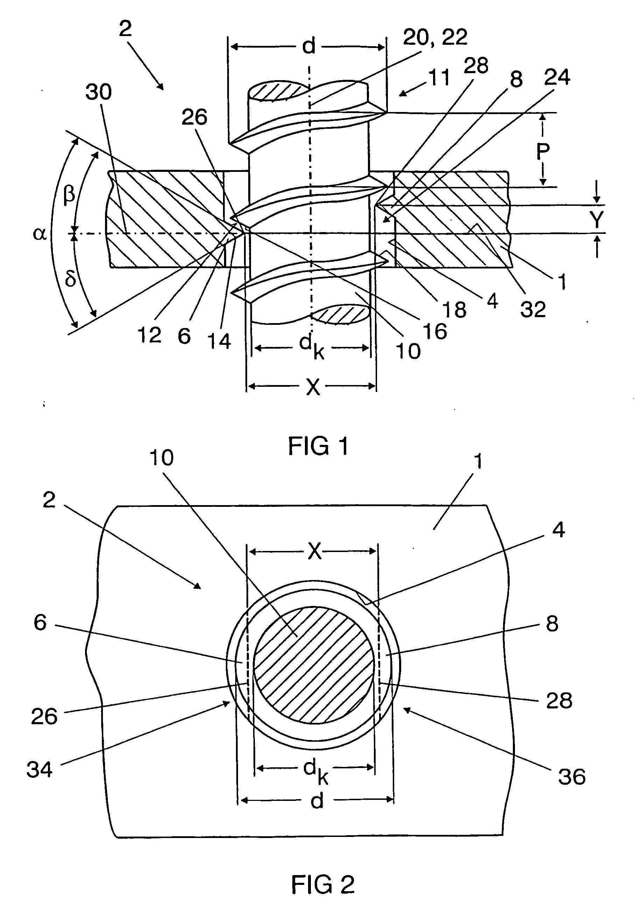

Figur 1 zeigt eine Schnittdarstellung durch ein Bauelement 1, bspw. eine Kabelabdeckung eines elektronischen Trafos HTM 70 bzw. HTM 105, mit einem erfindungsgemäßen Rückhaltesystem 2 für mit einem Gewinde versehene Befestigungsmittel. Das Rückhaltesystem 2 weist zwei diametral in einem Durchgangsloch 4 des Bauelements 1 angeordnete Vorsprünge 6, 8 auf, die in Axialrichtung gesehen in Abhängigkeit von der Gewindesteigung P einer als Befestigungsmittel verwendeten Befestigungsschraube 10 zueinander versetzt sind.

Die beiden Vorsprünge 6, 8 sind in Axialrichtung um einen Betrag Y, der in etwa dem halben Abstand der Gewindesteigung P entspricht, versetzt in dem Durchgangsloch 4 angeordnet. In Radialrichtung mit Bezug zur Befestigungsschraube 10 sind die Vorsprünge 6, 8 in einem Abstand X zueinander angeordnet, der etwas größer als ein Kerndurchmesser dₖ aber kleiner als ein Gewindeaußendurchmesser d eines Gewindes 11 der Befestigungsschraube 10 ist (siehe auch Figur 2). Hierdurch wird erreicht, dass die Befestigungsschraube 10 aufgrund des kleineren Abstands zwischen den Vorsprüngen 6, 8 gegenüber dem größeren Gewindeaußendurchmesser d der Befestigungsschraube 10 unverlierbar in dem Durchgangsloch 4 gehalten ist.

Die Vorsprünge 6, 8 sind einstückig und mit einem etwa keilförmigen Querschnitt an dem ersten Bauelement 1 ausgebildet, wobei Seitenflächen 12, 14 der Vorsprünge 6, 8 mit Gewindeflanken 16, 18 der Befestigungsschraube 10 zumindest abschnittsweise in Anlage bringbar sind. Dadurch ist das Rückhaltesystem 2 in der Lage, die Befestigungsschraube 10 am Herausfallen zu hindern und eine Längsachse 20 der Befestigungsschraube 10 in einer Position zu halten, die in etwa einer Längsachse 22 des Durchgangslochs 4 entspricht. Ein Verkanten der Befestigungsschraube 10 im Durchgangsloch 4 wird dadurch verhindert und die Montage wesentlich erleichtert.

Weiterhin können die Vorsprünge 6, 8 elastisch verformbar ausgebildet sein, um ein axiales Einführen der Befestigungsschraube 10 in das Durchgangsloch 4 zu ermöglichen. Dadurch kann die Befestigungsschraube 10 axial in das Durchgangsloch 4 eingedrückt werden, wobei sich die Vorsprünge 6, 8 elastisch verformen, in ein Gewindeprofil 24 eindringen und dadurch die Befestigungsschraube 10 in dem Durchgangsloch 4 halten.

Jeder der beiden keilförmigen Vorsprünge 6, 8 hat zwei Seitenflächen 12, 14, die einen von einem Winkel β und einem Winkel δ gebildeten Scheitelwinkel α einschließen und eine gemeinsame Kante 26, 28 ausbilden. Die Winkel β bzw. δ können symmetrisch oder asymmetrisch zu einer Scheitelachse 30, 32 der Vorsprünge 6, 8 ausgebildet sein und betragen vorzugsweise zwischen 10° und 45°. Insbesondere kann der dem Befestigungsmittel 10 bei der Vormontage zugewandte Winkel β im Verhältnis zu dem Winkel δ größer ausgeführt sein und als Einführhilfe dienen. Die Winkel β bzw. δ betragen bei dem gezeigten Ausführungsbeispiel etwa 30° und sind demnach symmetrisch zu der Scheitelachse 30, 32 ausgebildet.

Gemäß Figur 2 sind die beiden diametral angeordneten Vorsprünge 6, 8 als in das Durchgangsloch 4 radial vorstehende Kreissegmente 34, 36 ausgeführt, wobei die Kanten 26, 28 der Vorsprünge 6, 8 in der Ansicht nach Figur 2 parallel zueinander und tangential zum Durchgangsloch 4 angeordnet sind.

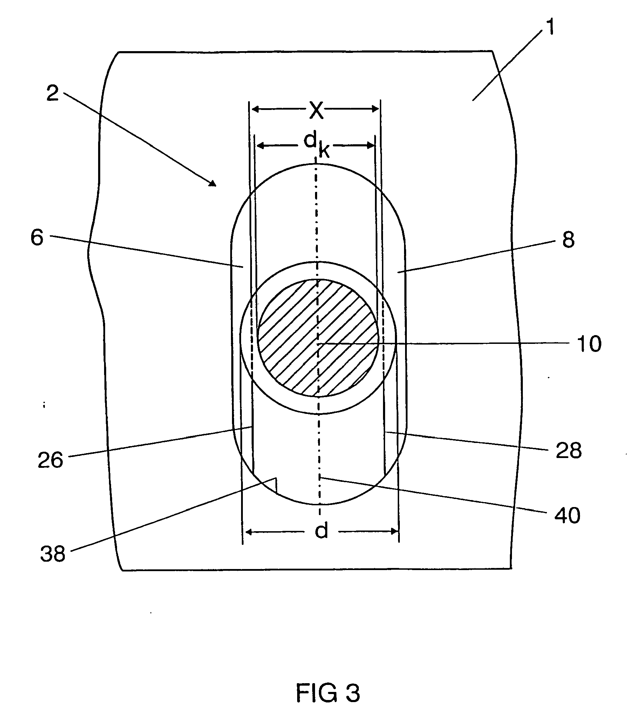

Figur 3 zeigt eine Draufsicht auf ein in einem Langloch 38 ausgebildetes Rückhaltesystem 2, wobei die geschnittene Seitenansicht der Darstellung des Ausführungsbeispiels in Figur 1 entspricht. Bei dem in Figur 3 dargestellten Ausführungsbeispiel sind die Vorsprünge 6, 8 diametral an den beiden längeren Seiten des Langlochs 38 angeordnet. Diese Ausführung des Rückhaltesystems 2 ermöglicht einen Ausgleich der Fertigungstoleranzen bei der Montage, da die Befestigungsschraube 10 entlang einer Längsachse 40 des Langlochs 38 verschiebbar aufgenommen ist und dabei von den Vorsprüngen 6, 8 geführt ist.

Offenbart ist ein Rückhaltesystem 2 für mit einem Gewinde 11 versehene Befestigungsmittel 10, insbesondere für Befestigungsschrauben in einem Durchgangsloch 4 eines Bauelements 1, wobei zumindest zwei im Wesentlichen diametral ausgebildete Vorsprünge 6, 8 in dem Durchgangsloch 4 angeordnet sind, die in Axialrichtung gesehen in Abhängigkeit von einer Gewindesteigung P des Befestigungsmittels 10 zueinander versetzt sind.

### Bezugszeichenliste

- 1: Bauelement
- 2: Rückhaltesystem
- 4: Durchgangsloch
- 6: Vorsprung
- 8: Vorsprung
- 10: Befestigungsmittel
- 11: Gewinde
- 12: Seitenfläche
- 14: Seitenfläche
- 16: Gewindeflanke
- 18: Gewindeflanke
- 20: Längsachse Befestigungsschraube
- 22: Längsachse Durchgangsloch
- 24: Gewindeprofil
- 26: Kante
- 28: Kante
- 30: Scheitelachse
- 32: Scheitelachse
- 34: Kreissegment
- 36: Kreissegment
- 38: Langloch
- 40: Längsachse Langloch

## Patentansprüche

1. Rückhaltesystem (2) für mit einem Gewinde (11) versehene Befestigungsmittel (10), insbesondere für Befestigungsschrauben, in einem Durchgangsloch (4) eines Bauelements (1), wobei zumindest zwei im Wesentlichen diametral ausgebildete Vorsprünge (6, 8) in dem Durchgangsloch (4) angeordnet sind, **dadurch gekennzeichnet, dass** die Vorsprünge (6,8) in Axialrichtung in Abhängigkeit von einer Gewindesteigung (P) des Befestigungsmittels (10) zueinander versetzt sind.

2. Rückhaltesystem nach Anspruch 1, wobei die zwei Vorsprünge (6, 8) in Axialrichtung um einen Betrag (Y), der dem halben Abstand der Gewindesteigung (P) oder einem ungeradzahligen Vielfachen davon entspricht, versetzt in dem Durchgangsloch (4) angeordnet sind.

3. Rückhaltesystem nach Anspruch 1 oder 2, wobei die Vorsprünge (6, 8) in Radialrichtung in einem Abstand (X) zueinander angeordnet sind, der größer als ein Kerndurchmesser (dₖ) aber kleiner als ein Gewindeaußendurchmesser (d) des Befestigungsmittels (10) ist.

4. Rückhaltesystem nach einem der vorhergehenden Ansprüche, wobei die Vorsprünge (6, 8) elastisch verformbar ausgebildet sind, so dass ein Einführen des Befestigungsmittels (10) in das Durchgangsloch (4) in axialer Richtung ermöglicht ist.

5. Rückhaltesystem nach einem der vorhergehenden Ansprüche, wobei die Vorsprünge (6, 8) als Kreissegmente (34, 36) ausgebildet sind und vorzugsweise einen etwa keilförmigen Querschnitt aufweisen.

6. Rückhaltesystem nach Anspruch 5, wobei radial innenliegende Kanten (26, 28) der Vorsprünge (6, 8) parallel zueinander angeordnet sind.

7. Rückhaltesystem nach einem der vorhergehenden Ansprüche, wobei das Durchgangsloch (4) ein Langloch (38) ist und die Vorsprünge (6, 8) an den beiden längeren Seiten des Langlochs (38) angeordnet sind.

8. Rückhaltesystem nach einem der vorhergehenden Ansprüche, wobei das Bauelement (1) eine Kabelabdeckung für einen Transformator zum Betrieb einer Lampe ist.

## Claims

1. Restraining system (2) for fixing means (10) provided with a thread (11), in particular for fixing screws in a through-hole (4) in a component (1), at least two essentially diametrically formed projections (6, 8) being arranged in the through-hole (4), **characterized in that** the projections (6, 8) are offset with respect to one another in the axial direction as a function of a thread pitch (P) of the fixing means (10).

2. Restraining system according to Claim 1, the two projections (6, 8) being arranged in the through-hole (4) such that they are offset in the axial direction by an amount (Y) which corresponds to half the distance of the thread pitch (P) or to an odd-numbered multiple thereof.

3. Restraining system according to Claim 1 or 2, the projections (6, 8) being arranged in the radial direction at a distance (X) from one another which is greater than a core diameter (dₖ) but less than a thread outer diameter (d) of the fixing means (10).

4. Restraining system according to one of the preceding claims, the projections (6, 8) being designed to be elastically deformable such that it is possible to insert the fixing means (10) into the through-hole (4) in the axial direction.

5. Restraining system according to one of the preceding claims, the projections (6, 8) being in the form of circle segments (34, 36) and preferably having an approximately wedge-shaped cross section.

6. Restraining system according to Claim 5, radially inner edges (26, 28) of the projections (6, 8) being arranged parallel to one another.

7. Restraining system according to one of the preceding claims, the through-hole (4) being a slot (38), and the projections (6, 8) being arranged on the two longer sides of the slot (38).

8. Restraining system according to one of the preceding claims, the component (1) being a cable cover for a transformer for operating a lamp.

## Revendications

1. Système (2) de retenue d'un moyen (10) de fixation muni d'un filetage (11), notamment de vis de fixation, dans un trou (4) traversant d'un élément (1), dans lequel au moins deux saillies (6, 8) formées sensiblement de façon diamétrale sont disposées dans le trou (4) traversant, **caractérisé en ce que** les saillies (6, 8) sont décalées l'une par rapport à l'autre en direction axiale en fonction du pas (P) de filetage du moyen (10) de fixation.

2. Système de retenue suivant la revendication 1, dans lequel les deux saillies (6, 8) sont disposées de manière décalée dans le trou (4) traversant en direction axiale d'un montant (Y) qui correspond à la demi-distance du pas (P) de filetage ou à un multiple impair de celui-ci.

3. Système de retenue suivant la revendication 1 ou 2, dans lequel les saillies (6, 8) sont disposées en direction radiale à une distance (X) l'une de l'autre qui est plus grande qu'un diamètre (dₖ) d'âme mais plus petite qu'un diamètre (d) extérieur de filetage du moyen (10) de fixation.

4. Système de retenue suivant l'une des revendications précédentes, dans lequel les saillies (6, 8) sont déformables élastiquement, de manière à rendre possible une introduction du moyen (10) de fixation dans le trou (4) traversant dans la direction axiale.

5. Système de retenue suivant l'une des revendications précédentes, dans lequel les saillies (6, 8) sont constituées sous la forme de segments (34, 36) de cercle et ont, de préférence, une section transversale à peu près cunéiforme.

6. Système de retenue suivant la revendication 5, dans lequel des bords (26, 28) intérieurs radialement des saillies (6, 8) sont parallèles entre eux.

7. Système de retenue suivant l'une des revendications précédentes, dans lequel le trou (4) traversant est une boutonnière (38) et les saillies (6, 8) sont disposées sur les deux grands côtés de la boutonnière (38).

8. Système de retenue suivant l'une des revendications précédentes, dans lequel l'élément (1) est une couverture de câble pour un transformateur en vue de faire fonctionner une lampe.
